# EUROPEAN PATENT APPLICATION

(11) **EP 2 578 873 A2**
(43) Date of publication of application: **10.04.2013**
(21) Application number: 12186209.8
(22) Date of filing: 27.09.2012
(51) Int. Cl.: F03D 1/00, F03D 11/00

(54) **Wind turbine installation with a self-contained power production component enclosure**

(30) Priority: 06.10.2011 US 201113267110
(71) Applicant: General Electric Company, Schenectady, NY 12345 (US)
(72) Inventor: Gajewski, Richard A., Greenville, SC South Carolina 29615 (US); Voss, Stefan, 48499 Salzbergen (DE); Hoyt, Oscar Fernando, Greenville, SC South Carolina 29615 (US); Bloomstran, Kevin Mark, Greenville, SC South Carolina 29615 (US)
(74) Representative: Bedford, Grant Richard

(57) **Abstract**

A wind turbine installation 10 includes a foundation 20 and a wind turbine tower 12 erected on the foundation. A self-contained external enclosure 26 is located proximate to a base of the tower 12. The enclosure 26 is pre-assembled and includes a plurality of power production components contained therein. The enclosure 26 is pre-assemble and pre-wired with the power production components independent of the tower 12 and can be subsequently mated to the tower 12 via disconnectable cables at the wind turbine site.

## Description

The present invention relates generally to the field of wind turbines, and more particularly to an enclosure for the wind turbine power production components.

Modem wind turbine installations generally include a tower erected on a foundation at the site. The wind turbine blades are mounted to a rotor hub that, in turn, drives a shaft that is coupled via a gearbox to a generator. The gearbox, generator, shaft, and related equipment are contained within a nacelle that is supported atop the tower. The essential power production components, such as switch cabinets, power distribution panels, converter threads, main control cabinet, and the like, are typically placed in various arrangements on the foundation and the bottom section of the tower is erected around or placed over the power production components. This configuration and associated process have certain disadvantages.

For example, the process requires precise placement and arrangement of the components, typically by manual measurement and marking on the foundation, prior to placement of the tower section. A faulty measurement or placement can result in a time-consuming and costly relocation of the components. Servicing and maintenance of the power production components requires access and entry into the tower. The components are typically arranged in a three or four tiered assembly at the base of the tower, which must be climbed and navigated to access the various components. Space for performing service and maintenance procedures is quite limited. In addition, the component tiers must be climbed and navigated each and every time a technician must access the nacelle for any reason.

The tiered arrangement of power production components within the tower also produce significant heat that traverses up the tower to the nacelle in a chimney-like effect, which can result in an increased load on the component cooling equipment within the nacelle.

Accordingly, the industry would benefit from an improved method for housing the power production components at a wind turbine installation.

Various aspects and advantages of the invention will be set forth in part in the following description, or may be clear from the description, or may be learned through practice of the invention.

In accordance with aspects of the invention, a wind turbine installation is provided that includes a foundation and a wind turbine tower erected on the foundation. A self-contained external enclosure is located proximate to a base of the tower. The enclosure is pre-assembled and includes a plurality of power production components contained therein. The enclosure is also pre-assembled and pre-wired with the power production components independent of the tower and subsequently mated to the tower via disconnectable cables at the wind turbine site.

The power production components within the enclosure may include any combination of power distribution panel, transformer cabinet, main control cabinet, converter threads, or converter main control panel. In a particular embodiment, all of these power production components are contained within the enclosure.

The enclosure may be variously configured. In a particular embodiment, the enclosure is a multi-sided box-like structure and may be, for example, a refurbished shipping container that includes internal walls that define separate rooms within the container.

The enclosure may also be pre-assembled with air handling and conditioning components, such as dampers, fans, heat exchangers, and so forth. The enclosure may include an internal room that is dedicated to the air handling and conditioning components.

In another embodiment, the wind turbine installation may include a foundation pad, with the enclosure located on the foundation pad. The foundation pad may further include terminal connections to cables that run from the foundation pad to the tower. The power production components may be connectable to the terminal connections, for example via cables from the enclosure that connect to the terminals.

The present invention also encompasses various embodiments of the power production component enclosure separate from a wind turbine installation. The enclosure may, for example, be pre-assembled with the power production components at a remote location and delivered pre-assembled and pre-wired to the wind turbine site.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
Fig. 1 is a perspective view of a conventional wind turbine;
Fig. 2 is a perspective view of an embodiment of a wind turbine installation with an enclosure in accordance with aspects of the invention;
Fig. 3 is a top view of an embodiment of an enclosure;
Fig. 4 is a perspective view of the front side of the enclosure of Fig. 2; and
Fig. 5 is a plan view of a wind turbine installation with an embodiment of an enclosure in accordance with aspects of the invention.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention include such modifications and variations as come within the scope of the appended claims and their equivalents.

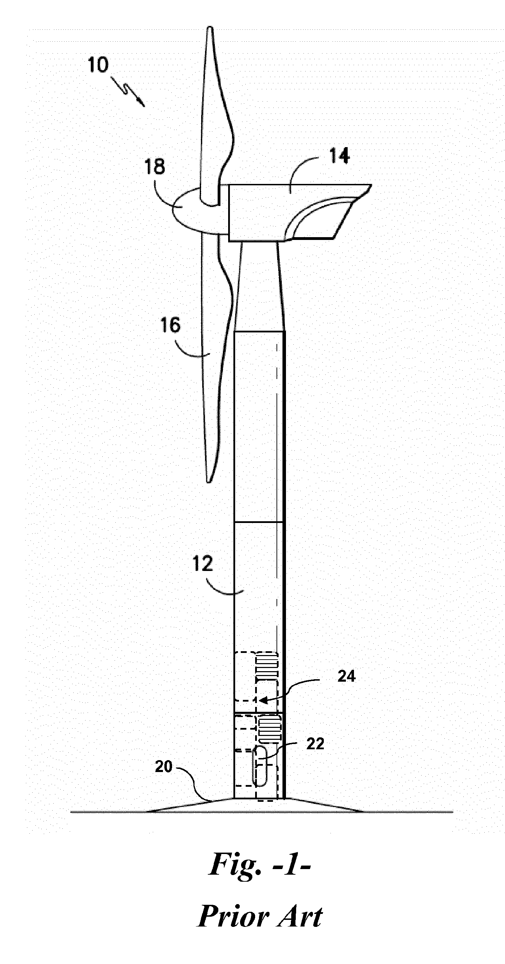

Fig. 1 illustrates a wind turbine 10 of conventional construction. The wind turbine 10 includes a tower 12 with a nacelle 14 mounted thereon. A plurality of turbine blades 16 are mounted to a rotor hub 18, which is in turn connected to a main flange that turns a main rotor shaft. The wind turbine power generation and control components are housed within the nacelle 14. The view of Fig. 1 is provided for illustrative purposes only to place the present invention in an exemplary field of use. It should be appreciated that the invention is not limited to any particular type of wind turbine configuration.

Fig. 1 also illustrates the base section of the tower 12 mounted on a foundation 20, which is typically a concrete foundation. An access door 22 is depicted in the figure. A plurality of power production components 24 are located within the base section of the tower 12 in a tiered configuration. These essential power production components may include, for example, switch cabinets, power distribution panels, converter threads, control cabinets, and so forth. The tower 12 is typically erected in sections, with the base section being lowered onto the power production components 24 once they have been arranged in their tiered array. The disadvantages of this particular configuration are discussed above. It can also be appreciated from Fig. 1 that, access to the nacelle 14 via the tower requires that personnel traverse the multiple tiers of power production components 24.

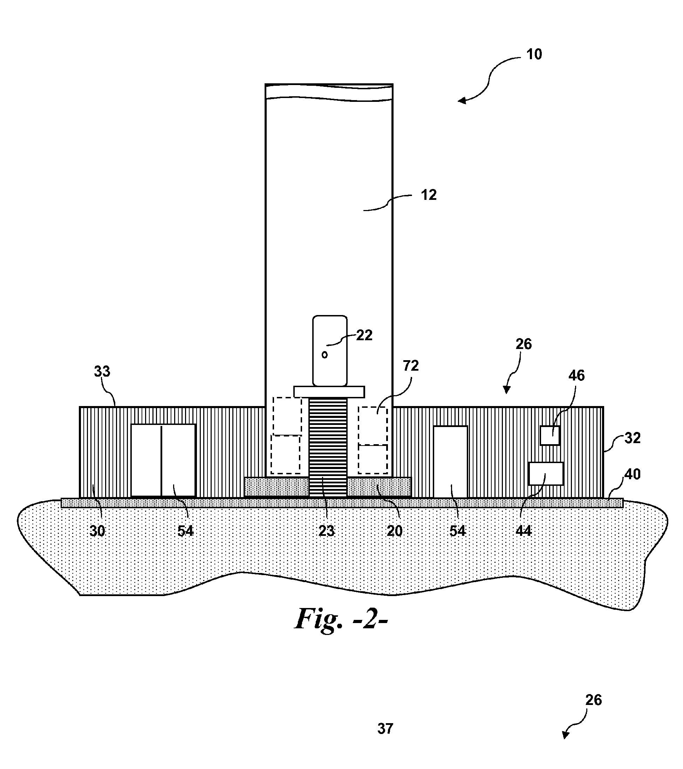

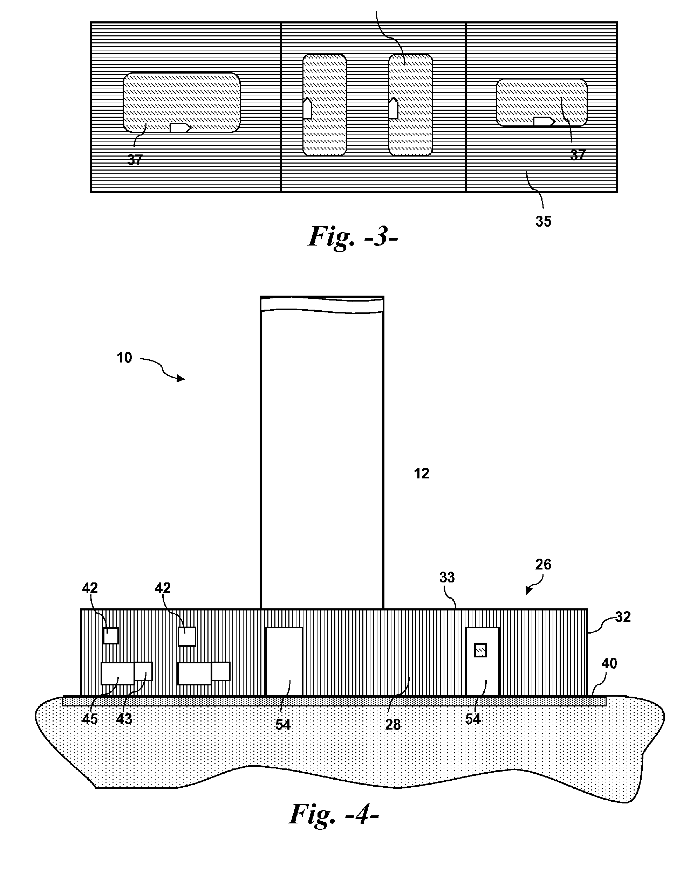

Fig. 2 illustrates an embodiment of a wind turbine installation 10 in accordance with aspects of the invention. The installation 10 includes a wind turbine tower 12 with the base section erected on a foundation 20. An access door 22 is provided into the tower 12 and may be accessible via the stairs 23, as is appreciated by those skilled in the art. An enclosure 26 is located proximate to the base section of the tower 12 and is placed on its own respective foundation pad 40, which may be pre-laid at a desired location proximate to the tower foundation 20. The enclosure 26 is a self-contained external building structure that may have various configurations. For example, in the embodiment illustrated in the figures, the enclosure 26 is a multi-sided box-like structure having a front wall 28 (Fig. 4), back wall 30, side walls 32, and a top wall 35 (Fig. 3). It should be appreciated that the enclosure 26 need not be a rectangular box-like structure, but may take on any shape and configuration wherein the enclosure 26 is pre-assembled and delivered to the wind turbine site in an assembled state. It is also within the scope and spirit of the invention that the enclosure 26 may be assembled into a complete structure at the wind turbine site. The enclosure is self-contained in that, once erected, the enclosure is a complete functional structure that can be moved into any desired location at the wind turbine site.

The enclosure 26 desirably has a size and shape for conventional transport to the wind turbine site, for example via rail or truck. The enclosure 26 thus may have the dimensions that are required by a local jurisdiction for transport via these conventional methods. In a particularly unique embodiment, the enclosure 26 may be a standard shipping container having standard dimensions (which may vary from one local to another) wherein the shipping container has been refurbished to function as an enclosure 26 as described herein.

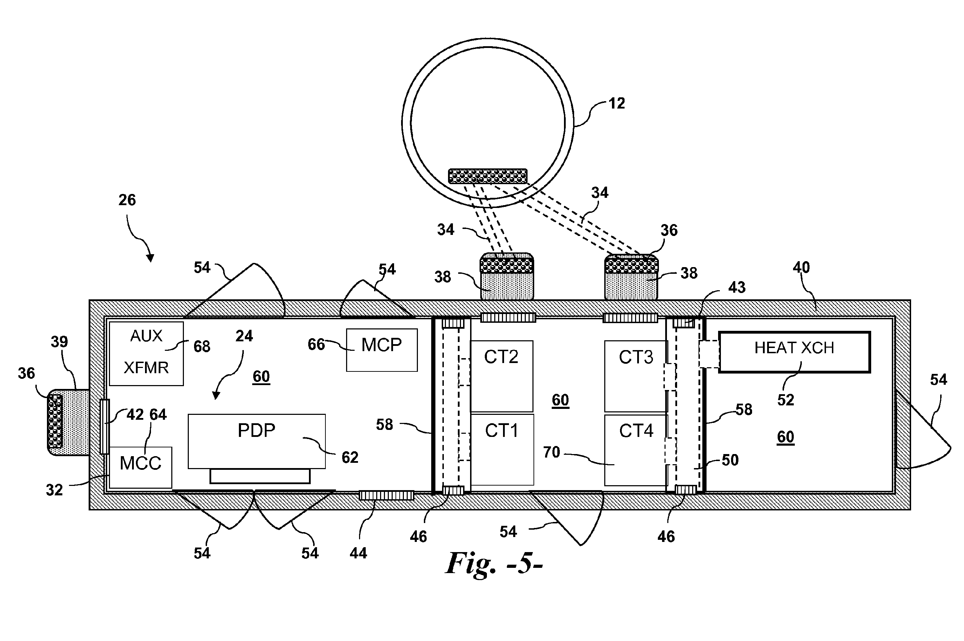

Referring to Fig. 5, the enclosure 26 is pre-assembled and pre-wired with any combination of the essential power production components 24 associated with the wind turbine. These power production components are pre-assembled and wired in the enclosure independent of the tower installation. The enclosure 26 with the power production components 24 contained therein is subsequently mated to the tower 12 via disconnectable cables that run between the tower 12 and the enclosure 26 through conduits 34. The conduits 34 may be underground or above ground. In this regard, the enclosure 26 may include any number or configuration of cable connect pads 38 that may be additions to the enclosure pad 40 or simply a defined portion or section of the pad 40. The cable connect pads 38 include cable connections 36 that mate with cables from the power production components 24 within the enclosure 26. In Fig. 5, two of the cable connect pads 38 and associated connections 36 are illustrated for the power production components within the enclosure 26. A third connection pad 39 is also illustrated at one of the side walls 32 of the enclosure 26. This pad 39 and associated connections 36 may be configured for connection to an external pad mount transformer (PMT).

Referring to Fig. 5 in particular, it should be appreciated that the invention is not limited to any number, type, or configuration of power production components 24 within the enclosure 26. In the embodiment of Fig. 5, for example, the enclosure 26 is separated into multiple internal rooms 60 by internal walls 58. These walls 58 may be erected, for example, within a standard shipping container as part of the process for refurbishing the container in accordance with aspects of the invention. The walls 58 may be insulated to maintain desired thermal and/or noise levels within the respective rooms 60. One of the rooms 60 may contain a main control cabinet (MCC) 64, power distribution panel (PDP) 62, main control panel (MCP) 66, and an auxiliary transformer cabinet (AUX) 68 in one of the rooms 60. Another of the rooms 60 may include a plurality of conventional converter threads 70 (CT1 through CT4).

The rooms 60 may include a false floor (e.g., steel walking plates) with the various cables from the power production components located beneath the false floors.

Yet another one of the rooms 60 may be dedicated to air handling and conditioning equipment for maintaining a controlled environment within the enclosure 26. For example, as illustrated in Fig. 5, one of the rooms 60 contains any manner of conditioning equipment, as represented by the heat exchanger 52. The air handling and conditioning equipment within the room may be in communication with the other rooms 60 via any configuration of dampers, duct work, and so forth. In this regard, it should be appreciated that the enclosure 26 may include any manner of intakes, exhaust, dampers, and duct work for maintaining the controlled environment within the disclosure. For example, referring to Fig. 5, multiple exhaust fans 44 are provided, as well as air intake plenums 43, exhaust air plenums 46, conduit feed thrus 45 (Fig. 4), ducting 50, and so forth. It should be readily appreciated that any manner and configuration of air handling and conveyance equipment may be utilized to achieve the desired climate control within the enclosure 26, and that the invention is not limited to any particular configuration of these components.

As particularly depicted in the perspective views of Figs. 2 and 4, the enclosure 26 may include any number and configuration of access doors 54 that lead into the respective internal rooms 60. The doors 54 may also have a size so as to accommodate change-out or maintenance of the internal power production component.

Fig. 3 depicts a top wall 35 of the enclosure 26. Any number and configuration of access hatches 37 may be defined in the top wall 35 (with framing support structure) to provide an alternate means for exchanging or servicing the power production components 24 housed within the enclosure 26.

Fig. 2 represents that certain components 72 may be contained within the base section of the tower 12 in the space that would have otherwise been occupied by the power production components 24 in the prior art configuration of Fig. 1. These internal power components 72 may be, for example, optional components such as aviation light cabinets, wind farm management cabinets, blade shadow modules, and any number and configuration of additional junction boxes for control cables that lead to and from the nacelle 14. These components 72 may be located below the level of the access door 22 and, thus, do not impede or in any way inhibit access to and from the nacelle 14 via the tower 12. Technicians do not have to navigate through or around the components 72 in order to climb the ladder within the tower to the nacelle 14.

It should also be readily appreciated that embodiments of the present invention also include a stand alone enclosure 26 that is self-contained and pre-assembled with the plurality of power production components 24 as discussed above. The enclosure 26 may be assembled, wired, and readied for transport at a remote site and then delivered to the wind turbine site either before or after erection of the tower 12. This also adds the benefit for reduced downtime as on-line enclosures can be swapped out with "backup" enclosures while repairs/maintenance are performed on the enclosures.

Aspects of the enclosure 26 are discussed above and are applicable to the stand alone enclosure.

While the present subject matter has been described in detail with respect to specific exemplary embodiments and methods thereof, it will be appreciated that those skilled in the art, upon attaining an understanding of the foregoing, may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A wind turbine installation (10), comprising:
a foundation (20);
a tower (12) erected on said foundation (20);
a self-contained external enclosure (26) located proximate to a base of said tower (12);
said enclosure (26) being pre-assembled and comprising a plurality of power production components contained therein; and
wherein said enclosure (26) is pre-assembled and pre-wired with said power production components independent of said tower (12) and subsequently mated to said tower (12) via disconnectable cables at the wind turbine site.

2. The wind turbine installation (10) of claim 1, wherein said power production components include any combination of power distribution panel, transformer cabinet, main control cabinet, converter threads, or converter main control panel.

3. The wind turbine installation (10) of any preceding claim, wherein said power production components include a power distribution panel, transformer cabinet, main control cabinet, converter threads, and converter main control panel.

4. The wind turbine installation (10) of any preceding claim, wherein said enclosure (26) comprises a multi-sided box-like structure.

5. The wind turbine installation (10) of any preceding claim, wherein said enclosure (26) comprises a shipping container with internal walls that define rooms within said container.

6. The wind turbine installation (10) of any preceding claim, wherein said enclosure (26) is pre-assembled with air handling and conditioning components.

7. The wind turbine installation (10) of any preceding claim, wherein said enclosure (26) comprises a multi-sided box-like structure with internal walls that define separate rooms within said enclosure, wherein one of said rooms is dedicated to air handling and conditioning components.

8. The wind turbine installation (10) of any preceding claim, further comprising a foundation pad (40), said enclosure (26) located on said foundation pad (40), said foundation pad further comprising terminal connections to cables that run from said foundation pad to said tower, said power production components connectable to said terminal connections.

9. A power production component enclosure (26) for a wind turbine installation (10), said enclosure comprising:
a self-contained walled enclosure pre-assembled with a plurality of power production components contained therein; and
wherein said enclosure is pre-assemble and pre-wired with said power production components independent of a wind turbine tower and subsequently mated to the tower via disconnectable cables at a wind turbine site.

10. The enclosure (26) of claim 9, wherein said power production components include any combination of power distribution panel, transformer cabinet, main control cabinet, converter threads, or converter main control panel.

11. The enclosure (26) of claim 9 or claim 10, wherein said power production components include a power distribution panel, transformer cabinet, main control cabinet, converter threads, and converter main control panel.

12. The enclosure (26) of any of claims 9 to 11, wherein said enclosure (26) is a shipping container fitted with internal walls that define rooms within said container.

13. The enclosure (26) of any of claims 9 to 12, wherein said enclosure (26) is pre-assembled with air handling and conditioning components.

14. The enclosure (26) of any of claims 9 to 13, wherein said enclosure (26) comprises a multi-sided box-like structure with internal walls that define separate rooms within said enclosure, wherein one of said rooms is dedicated to air handling and conditioning components.
